# EUROPEAN PATENT SPECIFICATION

(11) **EP 4 104 686 B1**
(45) Date of publication and mention of the grant of the patent: **02.12.2026**
(21) Application number: 22179573.5
(22) Date of filing: 17.06.2022
(51) Int. Cl.: A23L 7/157, A23L 13/50, A23L 17/00, A23P 20/12

(54) **SEED-COATED FOOD PRODUCT**
MIT SAATGUT BESCHICHTETES LEBENSMITTEL
PRODUIT ALIMENTAIRE ENROBÉ DE SEMENCES

(30) Priority: 18.06.2021 GB 202108808
(43) Date of publication of application: 21.12.2022
(73) Proprietor: Nomad Foods Europe Limited, Woking GU21 6HT (GB)
(72) Inventor: BRUNKE, Stefan, Middlesex, TW14 8HA (GB); DIBBERN, Timo, Middlesex, TW14 8HA (GB); BRILL, Kim-Anne, Middlesex, TW14 8HA (GB); NARCHI, Dr. Issa, Middlesex, TW14 8HA (GB); NICHOLLS, Richard John, Middlesex, TW14 8HA (GB)
(74) Representative: Haseltine Lake Kempner LLP

(56) References cited:
- EP-A1- 2 113 173
- EP-A1- 2 481 294
- WO-A1-87/01564
- KR-A- 20020 041 397
- US-A1- 2006 182 849
- ANONYMOUS: "La cuisine de Davy: Bâtonnets d'églefin panés aux graines", 21 February 2014 (2014-02-21), XP055895627, Retrieved from the Internet <URL:http://lacuisinededavy.blogspot.com/2014/02/batonnets-deglefin-panes-aux-graines.html> [retrieved on 20220225]
- ANONYMOUS: "Pumpkin Seed Crust - The Washington Post", 28 March 2013 (2013-03-28), XP055895597, Retrieved from the Internet <URL:https://www.washingtonpost.com/recipes/pumpkin-seed-crust/13313/> [retrieved on 20220225]
- ANONYMOUS: "Recipe: Sesame Seed-Crusted Tofu - Cleveland Clinic", 6 May 2021 (2021-05-06), XP055895614, Retrieved from the Internet <URL:https://health.clevelandclinic.org/recipe-sesame-seed-crusted-tofu/> [retrieved on 20220225]

## Description

### Background

Coated food products such as breaded or battered fish or chicken are very popular with consumers. These products are typically pre-fried and provided frozen for consumers to conveniently cook at home. These products are usually manufactured on mass scale, with the core of the food product (e.g. fish or chicken) efficiently coated using industrial production lines.

US 2006/182849 A1 discloses a food coating composition created by covering a food substrate with a first layer of wheat flour, a second layer of mixture of wheat flour or soy protein concentrate and water, and a third layer consisting of ground flax seed, breadcrumbs, flour, corn starch, chemical leavening agent and seasonings, salt and pepper; wherein between 10% to 20% of the flax seed may be a whole flax seed. Such coating may be partially cooked in a deep fat fryer and then baked, and the coated substrate may be frozen.

Consumers are looking for coated food products that have a unique texture, or taste or visual appeal compared with traditional-coated products. Consumers expect a stable coat on a coated food product such that the coat remains intact during cooking at home. In addition, there is increasing concern that traditional-coated products are "unhealthy". There is therefore a need for novel and unique coated products comprising healthier ingredients that provide the consumer with a distinctive textural experience, and an interesting and appealing appearance. However, any new coated food product needs to be efficiently mass-processed, cost-effective and be compatible with industrial-coating processes. Further, any new coated food product needs to have good taste, good palatability and good stability, as is expected by consumers who are used to eating traditional-coated food products.

There is therefore a need for food manufacturers to produce industrially coated food products that have a unique texture. In particular, the present inventors aimed to develop a manufactured food product with a thin and crunchy seed crust that comprises a high proportion of seeds. The present inventors nevertheless found that there was a challenge when using high proportions of seeds to achieve a continuous coating with a desirable texture, which is also stable such that no splitting of the coating occurs during cooking. Any new product also needed to demonstrate the same advantages as traditional coated-food products in terms of taste and palatability.

### Summary of Invention

In a first aspect, the present invention provides a manufactured food product comprising a core and a coating, wherein the coating comprises a seed coating layer, wherein the seed coating layer comprises from about 70-90 wt. % whole seed and from about 10-30 wt. % breadcrumbs, wherein the breadcrumbs have a particle size wherein at least 10% of particles are greater than 0.5 mm.

In a second aspect, the present invention provides a method of producing a manufactured food product, the method comprising
Providing a core,
Applying a dust onto the core to form a dust layer,
Applying batter mixture onto the dust layer,
Applying a seed-coating mixture onto the batter mixture, wherein the seed-coating mixture comprises from about 70-90 wt. % whole seed, and from about 10 - 30 wt. % breadcrumb, and Pre-frying the coated food product in oil, wherein the breadcrumbs have a particle size wherein at least 10% of particles are greater than 0.5 mm.

The second aspect may be used to form embodiments of the first aspect, i.e., in embodiments wherein the coating further comprises a dust layer and a batter layer.

The present invention provides a healthy seed-coated food product that is completely unique in texture and appearance, while still delivering great taste. The very high proportion of seeds in the seed-coating layer, which is completely different to any products known in the art, provides a coating with a crunchy, unique and pleasing texture. The present invention can also provide for a healthy food product with a good nutritional profile.

Importantly, despite the high proportion of whole seeds, products of the invention could be easily processed and handled using conventional coating production lines, where the resultant coating is found to be consistent, even and repeatable from product to product. In addition, the coating is found to be continuous and stable, and does not demonstrate splitting during consumer cooking. These advantages are achieved by the use of a seed-coating layer comprising whole seeds and a minimum size of breadcrumbs in a specific ratio, i.e., in the amounts as claimed. Without wishing to be bound by theory, the breadcrumbs as claimed are believed to facilitate binding and cohesion of the components in the seed coating layer allowing the seeds to efficiently stick to and surround the core. This leads to a product with good overall seed distribution, good coverage and good stability, despite a high proportion of whole seeds used in the coating layer. Without wishing to be bound by theory, breadcrumbs of a particular size may be key for a stable and closed coating, which in turn contributes significantly to product protection, e.g. against aging due to oxidation of the fish. Products of the invention were importantly found to be repeatable, used at large scale and were suitable for long-term storage, where the product remains consistent through its product life.

The products of the invention also provide additional benefits. A stable coating enables a frustration free consumer cooking. Additionally, the use of a certain amount of breadcrumbs (i.e. 10-30 wt. % of the seed coating layer, and more preferably about ~ 20%) was found to deliver a balanced taste and the perfect crunch after oven preparation

The resultant products demonstrated good or outstanding results in consumer sensory trials. While other seed-coated food products are known in the art, no prior art coatings contain such a high proportion of seeds, nor do they provide any indication as to how such a high proportion of seeds can be successfully incorporated into a seed coating layer, especially one that is suitable for or compatible with machine or mass production, while providing a product with good taste, stability and with no splitting. The resultant products of the invention are completely unique in texture and appearance to any other products known in the art.

Embodiments of the present invention may also have one or more of the following advantages over and above the prior art.
- The seed-coatings of the invention provide a high amount of whole seed, present in an amount which is between about 70 wt. % and 90 wt.% of the seed-coating layer, and more preferably about 80 wt. % of the seed-coating layer. The whole seeds are used in combination with 10-30 wt.% breadcrumbs, and more preferably 20 wt.% breadcrumbs. This specific ratio of components provides a pleasing, unique and crunchy texture as compared to conventional battered or breaded products. The resultant products of the present invention provide a coating which is completely different in texture and appearance to other coated food products in the art.
- The seed-coating layer has good stability such that the coated product can be transported and easily handled without disintegration, despite containing such a high amount of seeds. This also ensures that the product and coating layer is suitable for and compatible with machine or mass-production. Without wishing to be bound by theory, the presence of a small percentage of breadcrumbs (i.e., 10-30 wt.%) of a particular particle size is believed to facilitate binding and cohesion of the components in the coating, which enables such a high proportion of seeds to efficiently stick around the core in an even distribution, (e.g., even during machine or mass production) . The resultant coatings are homogenous and consistent. Such effects were not observed in the absence of breadcrumbs and with a higher proportion of whole seed. When alternative components were used in the coating, such as a fine rusk with a smaller particle size, segregation of the seed coating layer was observed, leading to a seed coating with an uneven seed distribution and a less consistent texture. This specific ratio of whole seed to breadcrumbs was also found to be crucial for texture. A seed coating layer with < 90 wt. % whole seed ensures that the seed coating layer is not too hard to chew, while a seed coating layer with > 70 wt. % whole seed provides the coating with a unique and crunchy, rather than breaded texture. A seed coating layer with > 70 wt. % whole seed also provides a good coverage of whole seeds, and a less "naked" appearance.
- The seed-coating layer described herein can be conveniently and cost-effectively applied during manufacturing. In particular, the presence of breadcrumbs facilitated the processing of the seed-coating layer such that the seed coating mixture could be used in standard production lines without modification. This was unexpected considering the high proportion of whole seed present in the seed coating mixture. The resultant product, formed by machine production and industrial coating lines, was also consistent from product to product.
- Embodiments of the present invention are healthy, and may have a good nutritional profile. In some embodiments, the products may be reduced in calories as compared to typical breaded and battered products. This can be achieved by the presence of a high proportion (i.e. > 70 wt. %) of whole seed in the seed coating layer. Due to the high proportion of whole seed, the products of the invention may provide a higher source of fibre and a lower amount of carbohydrate as compared to typical breaded and battered products. In some embodiments, the presence of whole seeds provides a source of dietary fibre. In some embodiments of the invention, a healthier product is provided (e.g. containing higher amounts of fibre and lower amounts of carbohydrate), while still providing a product with good texture and taste. Other healthier coating ingredients initially tested in trials, such as spelt flakes, instead provided a dry and floury mouthfeel which was perceived negatively by consumers in sensory testing.
- The products of the invention are also rich in protein, can provide a source of omega-3 essential fatty acids, and may be lower in carbohydrates as compared to traditional breaded fillets, as well as being low in saturated fats.
- The seed coating mixture can also be used to form a relatively thin seed-coating layer which does not dominate the fish.
- The product and coatings described in the examples herein are free of manufacturing limiting allergens including egg, soya/soy protein, sesame. The presence of these allergens would provide significant constraints in a manufacturing environment.

### Brief Description of Figures

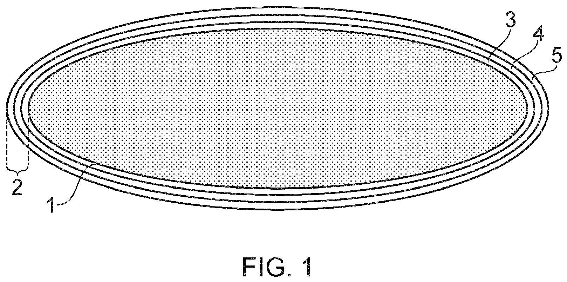

Figure 1 shows a schematic diagram of an example coated product according to the present invention (not to scale). 1 is the core of the manufactured food product and 2 is the coating of the manufactured food product. The coating may comprise a dust layer 3, a batter layer 4 and a seed coating layer 5.

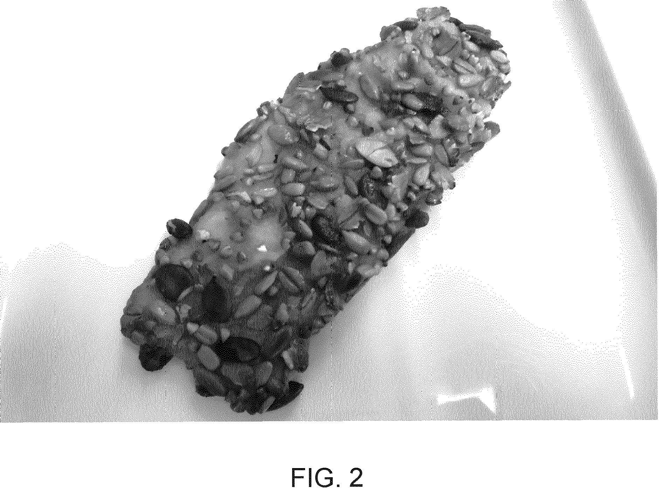

Figure 2 shows a photograph of a comparative example manufactured product produced in initial trials comprising 70% seeds and 30% fine rusk, wherein fine rusk refers to a rusk wherein 95% of particles have a particle size of less than 0.5 mm. This product had a poor distribution of whole seed and poor coverage of the coating layer around the core. Using the fine rusk, the surface is saturated and the larger seeds don't adhere well. Furthermore, the fine rusk absorbs moisture, therefore no crispness is achieved.

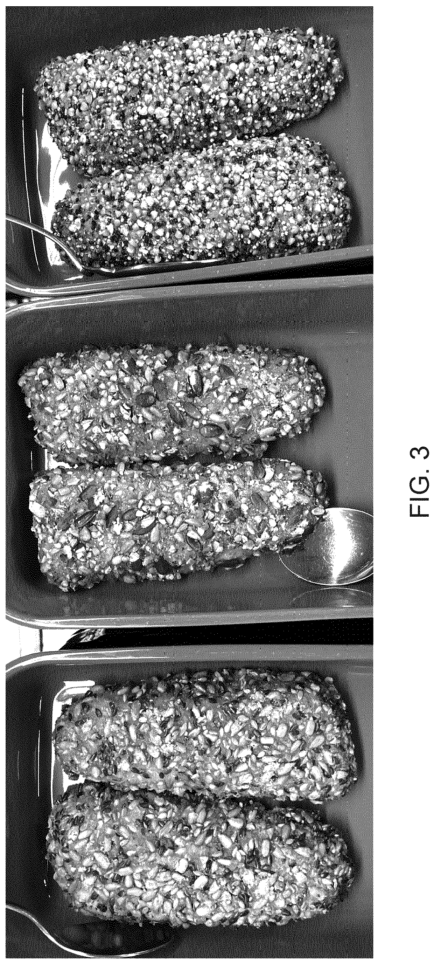

Figure 3 shows photographs of the example manufactured products of the invention. Left - shows a manufactured food product with a seed coating comprising 40% linseed, 40% sunflower seed, 20% breadcrumb; Centre - shows a manufactured food product with a seed coating comprising 40% pumpkin seed, 20% sunflower seed, 20% buckwheat and 20% breadcrumb; Right - shows a manufactured food product with a seed coating comprising 40% quinoa, 40% buckwheat and 20% breadcrumb. The example products have a good distribution of whole seed, and provide good coating coverage around the core and have a unique and appetizing appearance.

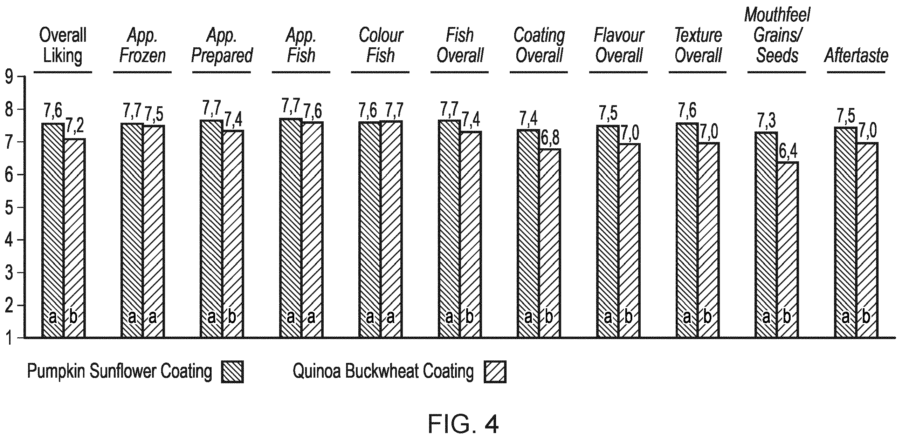

Figure 4 demonstrates the results of consumer testing of Example products of the present invention.

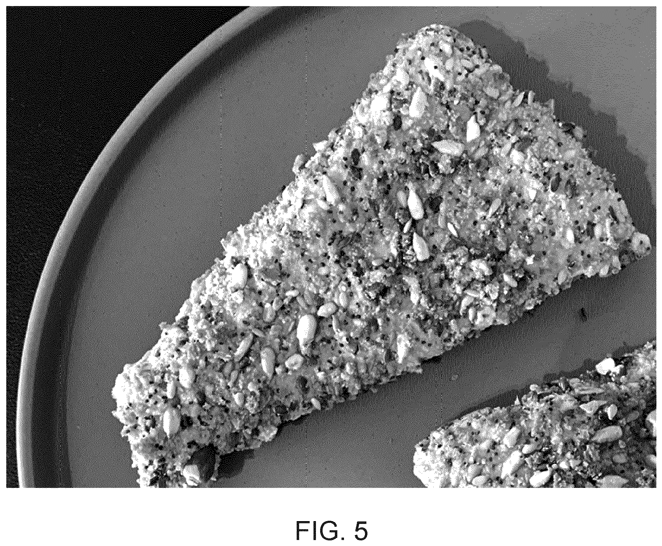

Figure 5 demonstrates a competitor product known in the art, which contains reduced whole seed in the seed-coating layer.

### Detailed Description

The presently-disclosed subject matter is illustrated by specific but non-limiting embodiments or examples throughout this description. Each example is provided by way of explanation of the present disclosure and is not a limitation thereon.

All combinations of method or process steps as used herein can be performed in any order, unless otherwise specified or clearly implied to the contrary by the context in which the referenced combination is made.

While the following terms used herein are believed to be well understood by one of ordinary skill in the art, definitions are set forth to facilitate explanation of the presently-disclosed subject matter.

Unless defined otherwise, all technical and scientific terms used herein have the same meaning as commonly understood by one of ordinary skill in the art to which the presently-disclosed subject matter belongs. Although any methods, products, and materials similar or equivalent to those described herein can be used in the practice or testing of the presently-disclosed subject matter, representative methods, representative products and materials are described.

Following long-standing patent law convention, the terms "a", "an", and "the" refer to "one or more" when used in this application, including the claims.

As used herein, the term "about," when referring to a value or to an amount of mass, weight, time, volume, concentration or percentage is meant to encompass variations of in some ±10%, in some embodiments ±5%, in some embodiments ±1%, in some embodiments ±0.5%, and in some embodiments ±0.1% from the specified amount, as such variations are appropriate to perform the disclosed invention(s).

"Plant-based" or "plant" referred to herein indicates that the product or component derives from plant and comprises no animal-derived product, for example, no meat or dairy product.

All lists of items, such as, for example, lists of ingredients, are intended to and should be interpreted as Markush groups. Thus, all lists can be read and interpreted as items "selected from the group consisting of' ... list of items ... "and combinations and mixtures thereof."

As used herein, the term "comprises" or "comprising" has an open meaning, which allows other, unspecified features to be present. This term embraces, but is not limited to, the semi-closed term "consisting essentially of" and the closed term "consisting of". Unless the context indicates otherwise, the term "comprises" may be replaced with either "consisting essentially of" or "consists of".

All percentages in the present disclosure are listed as percent by weight on the total weight of the manufactured food product, unless explicitly noted otherwise, for example, wherein components of the seed coating layer are by total weight of the seed coating layer.

### Manufactured Food Product

In a first aspect, the present invention provides a manufactured food product comprising a core and a coating, wherein the coating comprises a seed-coating layer, wherein the seed-coating layer comprises from about 70-90 wt. % whole seed and from about 10-30 wt. % breadcrumbs, wherein the breadcrumbs have a particle size wherein at least 10% of the breadcrumbs are greater than 0.5 mm. The particle size may be determined by sieve analysis.

A manufactured food product described herein is a food product that is machine-produced or suitable for mass production. In preferred examples, the core of the food product is coated using industrial coating lines. These products are intended to be distinguished from hand-made (i.e., non-machine produced) food products. Hand-made food products would not be suitable for machine or mass production, or for production on an industrial coating line, without further modification. Typically, they would be less consistent from product to product and/or contain a components that would not be suitable for producing a stable coating on an industrial production line.

In preferred embodiments, the manufactured food product is pre-fried, i.e., wherein the manufactured food-product has preferably been pre-fried after application of the seed coating layer/seed-coating mixture. Pre-frying as referred to herein refers to a frying step that occurs before being sold or packaged. The pre-frying occurs in addition to the baking or oven-cooking that is performed by the consumer. A pre-fried product may have a seed coating layer with improved stability. Pre-frying may help adhere the breadcrumbs and whole seeds together, while setting the batter layer, if present. In preferred embodiments and in the examples described herein, the product (i.e., packaged or sold product) is not a ready-to-eat product (i.e., the manufactured food product is designed for further cooking at home by the consumer, preferably by oven-cooking)..

In some embodiments, the manufactured food product is a chilled or frozen manufactured food product, or is suitable for being chilled or frozen.

In some embodiments or aspects, the manufactured food product comprises at least 12 wt.%, or at least 13 wt.%, or at least 14 wt. % whole seed, or at least or equal to 14.5 wt. % whole seed, or at least 15 wt. % whole seed by weight of the manufactured food product.

### Core

The manufactured food product described herein comprises a core. The core refers to the central part of the manufactured food product. The core may be formed of any suitable food material, such as any meat or vegetable filling. In some embodiments, the core is formed of fish, seafood, chicken, pork, or a plant-based material. In some embodiments and examples described herein, the core is formed of fish. In some embodiments, the fish core may be selected from pollock, haddock, saithe, or cod, hake, pangasius. In some examples, the fish core is Alaska pollock.

The core may have any suitable shape, weight, size, or thickness. In some embodiments, the core may be of a fillet-shape, which may have been pressure-formed into a fillet shape prior to coating. In preferred embodiments, the core has a mass of from about 50 g to 100 g. In preferred embodiments, the core may have a length (i.e. in the longest dimension) from about 10 to 16 cm. In preferred embodiments, the core may have a thickness from about 1.5 to 2.5 cm. The advantage of the preferred core size is the well-balanced taste and interaction with the seed crust. The fillet shape and/or these preferred dimensions is therefore preferred by consumers.

In preferred embodiments, the core may be present in an amount that is from 50 to 85 wt. % by weight of the food product, more preferably from 50 to 70 wt. % of the food product, more preferably from 55 to 70 wt. % of the food product, more preferably from 57 to 67 wt. % of the food product, more preferably from 60 to 65 wt. % of the food product, and more preferably about 62 wt.% of the food product. In some embodiments, the core may be present in an amount that is at least 50 wt. %, or at least 55 wt. %, or at least 57.5 wt. %, or at least 60 wt. %, or greater than or equal to 62 wt. % by weight of the food product. In some embodiments, the core may be present in an amount that is less than 85 wt.%, or less than 80 wt.%, or less than 75 wt.%, or less than 70 wt. %, or less than 68 wt.%, or less than 66 wt.%, or less than 64 wt.%, or less than or equal to 62 wt.% of the food product. The advantage of this amount is the well-balanced taste and interaction with the seed crust.

### Coating

The manufactured food product comprises a coating, which comprises a seed coating layer as described herein. In preferred embodiments, the coating surrounds the core (i.e. the coating is applied to all sides of the core). In preferred embodiments, the coating covers at least 98 wt. %, or at least 99 wt. %, or 100 wt. % of the core (i.e. as determined by the surface area of core which is coated as a proportion of the total surface area of the core). A coating with good coverage of seed has a better appearance and a more consistent texture.

In some embodiments and examples described herein, the coating has a thickness of from about 2 to about 6 mm, thereby providing a thin coating that does not dominate the fish. In some embodiments, the coating has a thickness of less than 6mm, or less than 5mm, or less than 4 mm, or less than 3 mm. In some embodiments, the coating has the same or substantially the same thickness at all parts around the core. In preferred embodiments, the coating is formed of the same or substantially the same materials at all parts around the core. Substantially the same defined herein may refer to any thickness or composition that is within ± 10% of the thickness or composition at another part of the coating.

In some embodiments, the coating may be present in an amount that is from about 25-50 wt. % of the food product. In some embodiments, the coating may be present in an amount that is about 38 wt. % of the total food product.

In preferred embodiments, the coating layer preferably further comprises a batter layer disposed between the core and the seed-coating layer. In preferred embodiments, the coating layer comprises a dust layer, a batter layer and a seed-coating layer, wherein the dust layer is disposed on the core, the batter layer is disposed on the dust layer, and wherein the seed-coating layer is disposed on the batter layer. This may contribute to improved stability of the coating.

### Seed-coating Layer

The seed coating layer described herein comprises from about 70-90 wt. % whole seed, and from about 10-30 wt. % breadcrumbs. In preferred embodiments, the seed coating layer comprises from about 75-85 wt. % whole seed, and from about 15-25 wt. % breadcrumbs, or more preferably from about 77.5-82.5 wt. % whole seed, and from about 17.5-22.5 wt. % breadcrumbs, or even more preferably, about 80 wt. % whole seed and about 20 wt. % breadcrumbs. Such amounts of components provide a seed-coating layer with the best combination of features. Too little whole seed (i.e. < 70 wt. %) led to a seed-coating layer that did not have a desirable crunchy texture, with instead a more breaded texture. Too little whole seed (i.e. < 70 wt. %) also led to a seed-coating layer that had poorer coverage of the core and a more "naked" appearance. Too much whole seed (i.e. > 90 wt. %), on the other hand, led to a seed-coating that was too thick and too hard to chew, with a product that was less stable with seeds that did not adequately stick to the core. The optimum ratio of whole seed to breadcrumbs was found to be 80 wt. % whole seed and 20 wt. % breadcrumb. This provided best balance of texture which was crunchy but not too hard, with good seed coverage.

In some embodiments, the seed coating layer comprises whole seed and breadcrumb in a ratio of about 9:1 to about 2.3:1, or from about 6:1 to about 2.5:1, or from about 5:1 to about 3:1, or about 4:1.

The seed coating layer may further comprise one or more additional ingredients. The one or more additional ingredients may further comprise herbs, seasoning or spices The one or more additional ingredients may be present in the seed coating layer in an amount less than 10 wt. % of the seed-coating layer, or less than 9 wt.% of the seed-coating layer, or less than 8 wt.% of the seed-coating layer, or less than 8 wt.% of the seed-coating layer, or less than 7 wt.% of the seed-coating layer, or less than 6 wt.% of the seed-coating layer, or less than 5 wt.% of the seed-coating layer, or less than 4 wt.% of the seed-coating layer, or less than 3 wt.% of the seed-coating layer, or less than 2 wt.% of the seed-coating layer, or less than 1 wt.% of the seed-coating layer. In other embodiments, the seed coating layer may be free of one or more additional ingredients.

In preferred embodiments, the seed coating layer is present in the food product in an amount of 10 to 30 wt.%, more preferably from 15 to 25 wt. %, more preferably from 17 to 20 wt.%, and in some examples about 18-19 wt.%. In some embodiments, the seed coating layer is present in the food product in an amount that is greater than 10 wt.%, more preferably greater than 15 wt.%, or greater than 16 wt.%, or greater than 17 wt.%, or greater or equal to 18 wt. % of the food product. In some embodiments, the seed coating layer is present in the food product in an amount that is less than 30 wt. %, more preferably less than 25 wt. %, or less than 24 wt. %, or less than 23 wt. %, or less than 22 wt. %, or less than 21 wt. %, or less than 20 wt. %, or less than or equal to 19 wt. % of the food product.

### Whole Seed

The seeding coating layer comprises whole seed. Whole seed defined herein refers to the edible seed part or the hulled seed. Whole seed defined herein refers to large pieces or chunks of seed as well as whole seeds, but excludes ground or particulate seed. In some embodiments, the whole seeds are unprocessed. In other embodiments, the whole seeds have been toasted or cracked prior to application to the core. In some embodiments, the whole seed may refer to seeds with a mean average length (i.e., wherein length is defined as the longest dimension of the whole seed) of at least 1 mm, or at least 2mm, or at least 3 mm, or at least 4 mm, or at least 5 mm, or at least 6 mm, or at least 7 mm, or at least 8 mm, or at least 9 mm, or at least 1 cm, or at least 1.1 cm, or at least 1.2 cm, or at least 1.3 cm, or at least 1.4 cm, or at least 1.5 cm, or at least 1.6 cm. The mean minimum size may be as determined using a standard measuring device, e.g., a ruler. Pumpkin seeds, for example, have a mean average length of around 1.5 cm. Unexpectedly, whole seeds could be easily coated and were compatible with the industrial-coating production lines in the presence of breadcrumbs, despite having such a large size.

The seed coating layer comprises from about 70-90 wt. % whole seed, more preferably from about 75-85 wt. % whole seed, more preferably from about 77.5 wt. % to about 82.5 wt. % whole seed. In some embodiments, the seed coating layer comprises greater than 75 wt.% whole seed, or greater than 76 wt.%, or greater than 77 wt.%, or greater than 78 wt.%, or greater than 79 wt.%, or greater than or equal to about 80 wt.% whole seed. In some embodiments, the seed coating layer comprises less than 90 wt.% whole seed, or less than 89 wt.%, or less than 88 wt.%, or less than 87 wt.%, or less than 86 wt.%, or less than 85 wt.%, or less than 84 wt.%, or less than 83 wt.%, or less than 82 wt.%, or less than 81 wt.%, or less than or equal to about 80 wt.% whole seed (i.e. as a proportion of the seed-coating layer).

In some embodiments, the seed-coating layer may comprise one type of whole seed. In other embodiments, the seed-coating layer may comprise more than one type of whole seed (i.e. to form a mixed seed-coating layer). In some embodiments, the seed-coating layer may comprise two or more, three or more, or four or more types of whole seeds. In consumer testing, it was found that consumers generally preferred the texture of a seed coating layer with more than one type of whole seed (i.e. a mixed seed-coating layer) since this provided a seed coating layer with a visual variety in appearance, taste and texture.

The whole seed may comprise any suitable type of whole seed. In some embodiments, the whole seed may comprise linseed (i.e. brown linseed, golden linseed), sunflower seed, pumpkin seed, buckwheat, quinoa (i.e., red quinoa, blond quinoa, puffed quinoa, black quinoa), poppy seed, sesame seed or any combination thereof. Such seeds were found to provide a coating with a particularly good unique crunchy coating that provided a good textural experience for the consumer, while being compatible with an industrial coating process. In preferred embodiments, the whole seed may comprise linseed, sunflower seed, quinoa, pumpkin seed, buckwheat, or any combination thereof. In some examples, black quinoa was less preferred due to its dark colour after cooking.

In some embodiments, the seed-coating may comprise a combination of linseed and sunflower seeds. In some embodiments, the seed-coating may comprise linseed and sunflower seeds in a ratio of from 1:2 to 2:1, or from 1:1.5 to 1.5:1, or about 1:1. The linseed may comprise golden linseed, brown linseed or a combination thereof. In consumer testing, this combination of whole seeds was found to be particularly liked by consumers in terms of texture and overall liking, with 80% of respondents saying they would purchase a product comprising this combination of seeds. This combination of whole seeds also had an attractive appearance after cooking with a golden-brown colour. This combination of whole seeds also provides a manufactured food product with a particularly high amount of fibre.

In alternative embodiments, the seed-coating may comprise a combination of pumpkin seeds in combination with sunflower seeds and/or buckwheat. In some embodiments, the seed-coating may comprise pumpkin seeds to sunflower seeds and/or buckwheat in a ratio of from 1:2 to 2:1, or about 1:1. In some embodiments, the seed-coating may comprise sunflower seeds and buckwheat in a ratio of from 1:2 to 2:1, or from 1:1.5 to 1.5:1, or about 1:1. This combination of whole seeds in the seed-coating layer was found to provide a particularly effective and crunchy texture.

In some embodiments and examples, the whole seed does not comprise poppy seed.

### Breadcrumb

The seeding coating layer comprises breadcrumb in an amount from about 10-30 wt. %, more preferably from about 15-25 wt. %, more preferably from about 17.5-22.5 wt. %, and even more preferably in an amount that is about 20 wt.% by weight of the seed coating layer. In some embodiments, the seed coating layer comprises greater than about 15 wt.% breadcrumb, or greater than about 16 wt.%, or greater than about 17 wt.%, or greater than about 18 wt.%, or greater than about 19 wt.%, or greater than or equal to about 20 wt.% breadcrumb by weight of the seed coating layer. In some embodiments, the seed coating layer comprises less than about 30 wt.% breadcrumb, or less than about 29 wt.%, or less than about 28 wt.%, or less than about 27 wt.%, or less than about 26 wt.%, or less than about 25 wt.%, or less than about 24 wt.%, or less than about 23 wt.%, or less than about 22 wt.%, or less than about 21 wt.%, or less than or equal to about 20 wt.% breadcrumb by weight of the seed coating layer.

Breadcrumb(s) as described herein refers to a crumb material formed from ground bread. The bread may be baked bread or panko bread. In some embodiments, the breadcrumbs comprise wheat flour, salt and yeast. In some embodiments, the breadcrumbs comprise > 90 wt. % wheat flour, 0.5-1 wt. % salt and 0.5-1 wt. % yeast, wherein wt. % refers to the % of components by weight of the breadcrumb. In some embodiments, the breadcrumbs are forming by grinding bread prior to use.

The breadcrumbs defined herein are breadcrumbs with a particle size wherein at least 10% of breadcrumbs are greater than 0.5 mm (i.e. at least 10% of particles are retained on a 0.5 mm sieve (ASTM No. 35 or 35 mesh). In preferred embodiments, the breadcrumbs defined herein have a particle size wherein more than 90% of breadcrumbs have a particle size of less than 4 mm, or more preferably wherein more than 99% of breadcrumbs have a particle size of less than 4 mm (i.e., wherein at least 90% or 99% of particles pass through a 4 mm sieve (ASTM No.5 or 5 mesh).

The breadcrumbs of the invention may be described as medium-sized breadcrumbs, wherein at least 10% of breadcrumbs are greater than 0.5 mm (i.e. at least 10% of breadcrumbs are retained on a 0.5 mm sieve (ASTM No. 35 or 35 mesh) and wherein at least 25% of breadcrumbs are less than 1.7mm (i.e. wherein at least 25% of breadcrumbs pass through a 1.7 mm sieve (ASTM No. 12 or 12 mesh) and/or wherein the breadcrumbs have a particle size wherein at least 50% of breadcrumbs have a particle size between 0.5mm and 2.8 mm (i.e. wherein at least 50% of breadcrumbs are retained on a 0.5 mm sieve (ASTM No. 35 or 35 mesh) and wherein at least 50% of breadcrumbs pass through a 2.8 mm sieve (ASTM No. 7 or 7 mesh)). Medium-sized particle breadcrumbs may be particularly preferred because there is an optimal distribution of fine and coarse particles which may provide an even more stable and closed coating which is even less prone to splitting.

In some embodiments, the breadcrumbs have a particle size wherein at least 50% of breadcrumbs have a particle size between 0.71 and 2.8 mm, (i.e., wherein at least 50% of particles are retained on a 0.71 mm sieve (ASTM No 25 or 25 mesh) and wherein at least 50% of particles pass through a 2.8 mm sieve (ASTM No. 7 or 7 mesh).

In some embodiments, the breadcrumbs have a particle size wherein at least 20% of breadcrumbs are greater than 0.5 mm (ASTM No. 35 or 35 mesh), or at least 30% of breadcrumbs are greater than 0.5 mm (ASTM No. 35 or 35 mesh), or at least 40% of breadcrumbs are greater than 0.5 mm (ASTM No. 35 or 35 mesh), or at least 50% of breadcrumbs are greater than 0.5 mm (ASTM No. 35 or 35 mesh). In some embodiments, the breadcrumbs have a particle size wherein at least 20% of breadcrumbs are greater than 0.71 mm (ASTM No 25 or 25 mesh), or at least 30% of breadcrumbs are greater than 0.71 mm (ASTM No 25 or 25 mesh), or at least 40% of breadcrumbs are greater than 0.71 mm (ASTM No 25 or 25 mesh), or at least 50% of breadcrumbs are greater than 0.71 mm (ASTM No 25 or 25 mesh). In some embodiments, the breadcrumbs have a particle size wherein at least 30% of the breadcrumbs are greater than 1.7 mm (ASTM No. 12 or 12 mesh).

In some embodiments, the breadcrumbs have a particle size wherein at least 25% of breadcrumbs are less than 1.7 mm, or at least 30% of breadcrumbs are less than 1.7mm, or at least 35% of breadcrumbs are less than 1.7 mm (i.e., wherein at least 25% of breadcrumbs, at least 30% of breadcrumbs, or at least 35% of breadcrumbs pass through a 1.7 mm sieve (ASTM No. 12 or 12 mesh).

In some embodiments, the breadcrumb has a d50 particle size between 1.7 and 2.8 mm. In some embodiments, 30-50% of the breadcrumbs are between 1.7 mm and 2.8 mm. In some embodiments, 24-50% of the breadcrumbs are between 0.71 mm and 1.7 mm. In some embodiments, 10-30% of the breadcrumbs are between 0.25 mm and 1.7 mm. In some embodiments, up to 8 % of the breadcrumbs are less than 0.25 mm. In some embodiments and examples, the breadcrumbs have the following particle distribution.
over 4 mm - up to 1%
between 2.8 mm-<4mm - up to 15%
between 1.7mm-<2.8mm - 30-50%
between 0.71 mm-<1.7 mm - 24-50%
between 0.25mm-<0.71 mm - 10-30%
less than 0.25 mm - up to 8%
i.e., wherein up to 1% of breadcrumbs are retained on a 4mm sieve (ASTM No.5 or 5 mesh), and/or wherein up to 15% breadcrumbs are retained on a 2.8 mm sieve (ASTM No. 7 or 7 mesh), and/or wherein between 30-50% breadcrumbs are retained on a 1.7 mm sieve (ASTM No. 12 or 12 mesh), and/or wherein between 24-50% breadcrumbs are retained on a 0.71 mm sieve (ASTM No. 25 or 25 mesh), and/or wherein between 10-30% breadcrumbs are retained on a 0.25 mm sieve (ASTM No. 60 or 60 mesh), and/or wherein up to 8% of breadcrumbs pass through a 0.25 mm sieve (ASTM No. 60 or 60 mesh).

In preferred embodiments, at least 10% of breadcrumbs have a particle size greater than 1.7 mm (i.e., wherein at least 10% of breadcrumbs are retained on a 1.7 mm sieve (ASTM No. 12 or 12 mesh), and/or more preferably wherein at least 20% of breadcrumbs have a particle size greater than 1.7 mm (i.e., wherein at least 20% of breadcrumbs are retained on a 1.7 mm sieve (ASTM No. 12 or 12 mesh)), and/or more preferably wherein at least 25% of breadcrumbs have a particle size greater than 1.7 mm (i.e., wherein at least 25% of breadcrumbs are retained on a 1.7 mm sieve (ASTM No. 12 or 12 mesh)), and/or more preferably wherein at least 30% of breadcrumbs have a particle size greater than 1.7 mm (i.e., wherein at least 30% of breadcrumbs are retained on a 1.7 mm sieve (ASTM No. 12 or 12 mesh)).

In preferred embodiments, at least 10% of breadcrumbs have a particle size less than 1.7 mm (i.e., wherein at least 10% of breadcrumbs pass through a 1.7 mm sieve (ASTM No. 12 or 12 mesh), and/or more preferably wherein at least 20% of breadcrumbs have a particle size less than 1.7 mm (i.e., wherein at least 20% of breadcrumbs pass through a 1.7 mm sieve (ASTM No. 12 or 12 mesh)), and/or more preferably wherein at least 25% of breadcrumbs have a particle size less than 1.7 mm (i.e., wherein at least 25% of breadcrumbs pass through a 1.7 mm sieve (ASTM No. 12 or 12 mesh)), and/or more preferably wherein at least 30% of breadcrumbs have a particle size less than 1.7 mm (i.e., wherein at least 30% of breadcrumbs pass through a 1.7 mm sieve (ASTM No. 12 or 12 mesh)).

The particle size described herein is as determined by sieve analysis, e.g., in accordance with ASTM methods. Sieve analysis is performed by sifting a particulate sample through a stack of wire mesh sieves, separating it into discrete size ranges. The particle size of the breadcrumbs used herein is believed to facilitate binding and promote contact between the whole seeds and the core or batter layer, if present. This particle size distribution of the breadcrumbs is also believed to facilitate an even distribution of the seed-coating layer, and provides a coating that is stable and less prone to splitting.

### Further Coating Components

In preferred embodiments, the coating further comprises a batter layer disposed between the core and the seed-coating layer. In other words, for a coating that comprises a batter layer and a seed coating layer, the seed coating layer is disposed on the batter layer, wherein the seed-coating layer forms the outermost layer. The presence of a batter layer may improve the adhesion of the seed-coating layer. In preferred embodiments, the batter is a wet batter, i.e., a batter layer formed using a batter mixture that comprises at least flour and water. The wet batter may further comprise flavorants or additives, for example, lemon oil, mustard, turmeric, salt. In some embodiments, the batter mixture comprises at least 25 wt. % wheat flour, or at least 30 wt. % wheat flour. In preferred embodiments, the batter mixture comprises 55 to 70 % water and 25 to 40% wheat flour. In some examples described herein, the batter mixture comprises 62% Water, 34% Wheat Flour, 2.3 % Salt, <2% Mustard, Turmeric, Black Pepper, Lemon oil. In some examples, this batter lead to a more stable seed-coating layer after pre-frying, as compared to an alternative batter layer consisting of 54% Water, 16% Maize Starch, 14% Tapioca dextrin, 11% Wheat Flour, <2% Salt, Dextrose, Black Pepper, Olive oil - extra virgin, Lemon extract. In preferred embodiments, the batter layer surrounds the core (i.e. the batter layer is applied to all sides of the core). In some examples, the wet batter is free of maize starch, tapioca dextrin or dextrose. In some embodiments, the coating, and more particularly the batter, is free of egg. It is preferred the batter is free of egg since egg is a manufacturing limiting allergen which provides both higher risks and constraints (e.g., storage requirements, hygiene etc.) and to a mass manufacturing process.

In preferred embodiments, the seed coating layer surrounds the batter layer (i.e. the seed-coating coating is applied to all sides of the core with a batter layer disposed thereon). In preferred embodiments, the seed coating layer covers at least 98 wt. %, or at least 99 wt. %, or 100 wt. % of the batter layer (i.e., as determined by the surface area of batter layer which is coated as a proportion of the total surface area of the core with a batter layer disposed thereon, and which may be as determined by visual analysis). A coating with good coverage of whole seed has a better appearance and a more consistent texture.

In some embodiments, if present, the batter layer is present in the food product in an amount of from about 10-30 wt. % by total weight of the food product, preferably from about 10-20 wt. %, more preferably from about 13-19 wt. %, more preferably from about 14-18 wt. %, and more preferably about 16 wt. % by total weight of the food product. In some embodiments, the batter layer is present in the food product in an amount greater than 10 wt.%, or greater than 11 wt.%, or greater than 12 wt.%, or greater than 13 wt.%, or greater than 14 wt.%, or greater than 15 wt.%, or greater or equal to 16 wt.% by total weight of the food product. In some embodiments, the batter layer is present in the food product in an amount less than 30 wt.%, or less than 25 wt.%, or less than 20 wt.%, or less than 19 wt.%, or less than 18 wt.%, or less than 17 wt.%, or less than or equal to 16 wt.% by total weight of the food product.

In preferred embodiments, the manufactured food product comprises
50-75 wt. % core, preferably about 57-67 wt. % core, more preferably about 62 wt. %
10-20 wt. % batter layer, preferably about 13-19 wt. %, more preferably about 16 wt. %
15-25 wt. % seed coating layer, preferably about 16-21 wt. %, more preferably about 18-19 wt. %, wherein wt. % refers to the percentage weight of the manufactured food product. This combination of core and layers leads to a food product with relatively thin and crunchy coating, which is particularly desirable for consumers as the components are well balanced. In some examples, the core is fish. In some examples, the product is pre-fried.

In some embodiments, the coating further comprises a dust layer in addition to the batter layer, wherein the dust layer is disposed between the core and the batter layer. In other words, for a coating comprising a dust layer, a batter layer and a seed coating layer, the dust layer is disposed on the core, the batter layer is disposed on the dust layer, and the seed coating layer is disposed on the batter layer to form the outer layer. The dust layer may serve to absorb moisture from the core (e.g. a fish core) and/or enhance batter layer adhesion. In some embodiments, the dust layer comprises fine wheat rusk. Fine wheat rusk may be defined herein as wheat rusk wherein 95% of particles have a particle size of less than 0.5mm as determined by sieve analysis (i.e. 95% of particles are not retained by a 0.5 mm sieve, ASTM 35, or 35 mesh). In preferred embodiments, if present, the dust layer is present in the food product in an amount of from about 1-5 wt. % by total weight of the food product, preferably from about 2-4 wt. %, or about 3 wt. % by total weight of the food product. In some embodiments, the dust layer is present in the food product in an amount greater than 1 wt. %, or greater than 2 wt. %, or greater than or equal to 3 wt. %. In some embodiments, the dust layer is present in the food product in an amount less than 5 wt.%, or less than 4 wt.%, or less than or equal to 3 wt.% of the total food product.

In preferred embodiments, the manufactured food product comprises
50-75 wt. % core, preferably about 57-67 wt. % core, more preferably about 62 wt. %
1-5 wt. % dust layer, preferably about 2-4 wt. %, more preferably about 3 wt. %
10-20 wt. % batter layer, preferably about 13-19 wt. %, more preferably about 16 wt. %
15-25 wt. % seed coating layer, preferably about 16-21 wt. %, more preferably about 18-19 wt. %., wherein wt. % refers to the percentage weight of the manufactured food product. This combination of core and layers leads to a food product with relatively thin and crunchy coating, which is particularly desirable for consumers. The presence of the dust layer, adhesion layer and seed coating layer in these amounts also contributed to the good stability of the coating. In some examples, the core is fish. In some examples, the product is pre-fried.

### Nutritional Profile

In some embodiments, the manufactured products of the present invention may have improved fibre content as compared to traditional breaded or battered food products comprising a similar or equivalent core material. In some embodiments, the manufactured food product comprises at least 1 g of dietary fibre per 100 g of food product, more preferably at least 1.5 g of fibre per 100 g of food product, and in some examples, at least 2.0 g of fibre per 100 g of food product, or least 2.5 g, or at least 3.0 g of fibre per 100 g of food product. In an example product, the food product comprises 3.2 g of fibre per 100 g of food product.

In some embodiments, the manufactured products of the present invention may be rich in protein. In some embodiments, the manufactured food product comprises at least 13 g of protein per 100 g of food product, or at least 14g of protein, or at least or equal to 15 g of protein per 100 g of food product.

In some embodiments, the manufactured products of the present invention may be lower in carbohydrates as compared to traditional breaded or battered food products comprising a similar or equivalent core material. In some embodiments, the manufactured food product comprises less than 20g of carbohydrate per 100 g of food product. In preferred embodiments, the manufactured food product comprises less than 19g of carbohydrate per 100 g of food product, or less than 18g, or less than 17g, or less than 16g, or less than or equal to 15 g of carbohydrate, or less than 14 g, or less than or equal to 13 g of carbohydrate per 100 g of food product.

In some embodiments, the manufactured food products of the present invention may be low in saturated fat. In some embodiments, the manufactured food product comprises less than or equal to 12 g of fat per 100 g of food product, or less than 11g of fat, or less than 10 g of fat per 100 g of food product. In some embodiment, the manufactured food product comprises less than 1.5 g of saturated fat per 100 g of food product, or less than 1.4 g saturated fat, or less than 1.3 saturated fat, or less than 1.2 saturated fat, or less than or equal to 1.1 g saturated fat per 100 g of food product.

In some embodiments, the manufactured food products of the present invention may have an acceptable level of calories and in some embodiments may be reduced in calories as compared to traditional breaded or battered food products comprising a similar or equivalent core material. In some embodiments, the manufactured food product comprises less than 215 kcal per 100 g of food product, or less than 214 kcal, or less than 213 kcal, or less than 212 kcal, or less than 211, kcal, or less than or equal to 210 kcal, or less than 209 kcal, or less than 208 kcal, or less than 207 kcal, or less than 206 kcal, or less than 205 kcal, or less than or equal to 204 kcal per 100 g of food product.

In some embodiments, the manufactured food product may comprise and/or provide a source of omega 3 fatty acids, for example, one or more of docosahexaenoic acid (DHA), eicosapentaenoic acid (EPA) and ALA (alpha-linolenic acid). In some embodiments, the manufactured food product comprises at least 40mg, or at least 45mg, or at least 50mg, or at least 60 mg, or at least 70 mg, or at least 80 mg, or at least 90 mg, or at least 100 mg, or at least 110 mg, or at least 120 mg of the sum of eicosapentaenoic acid and docosahexaenoic acid per 100g. In some example products described herein, the product comprises 124 mg of the sum of eicosapentaenoic acid and docosahexaenoic acid per 100g.

### Method

In a second aspect, the present invention provides a method of producing a manufactured food product, the method comprising
Providing a core,
Applying a dust onto the core to form a dust layer,
Applying batter mixture onto the dust layer,
Applying a seed-coating mixture onto the batter mixture, wherein the seed-coating mixture comprises from about 70-90 wt. % whole seed, and from about 10 - 30 wt. % breadcrumb, and Pre-frying the coated food product in oil, wherein the wherein the breadcrumbs have a particle size wherein at least 10% of the breadcrumbs are greater than 0.5 mm. The particle size may be determined using sieve analysis.

The dust layer may be as already described herein. The batter mixture is used to form a batter layer, and may comprise the same components as the batter layer or the batter mixture as already described herein. The seed coating mixture is used to form the seed coating layer, and may comprise the same components as the seed coating layer as described herein.

The pre-frying step may use any suitable conditions. In some embodiments, the pre-frying takes place at a temperature from about 180 to 199 °C, preferably about 195 °C. The pre-frying step may be performed for about 30 seconds to about 55 seconds, for example, about 40 seconds. In some embodiments, the oil is selected from rapeseed, sunflower or a combination thereof. Such oils are chosen because they are low in trans-saturated fats and commercially available in large quantities for industrial manufacturing

In some embodiments, prior to providing the core, the method comprises pressure-forming the core material into a fillet shape. In an embodiment, this comprises first sawing a portion from a block, and pressure-forming the sawn material into a fillet shape.

In some embodiments, the method step further comprises a freezing step, i.e., to form a frozen manufactured food product. In some embodiments, the freezing may be at a temperature less than - 18 °C, for at least 25 minutes, or at least 30 minutes, for example, at least or equal to about 35 minutes. After freezing, the frozen products may be packaged for transport.

### Examples

### Development of a seed coated food product

The present inventors sought to develop a healthy seed coated food product comprising a high proportion of whole seed, that had an acceptable crunchy texture. However, the present inventors found that it was a challenge to provide a seed coating layer with a high proportions of whole seeds that had a continuous coating with a desirable texture, was attractive in appearance and which is also stable such that no splitting of the coating occurs during cooking.

In a first trial, a product comprising a seed coating layer comprising 100% whole seed was produced. The 100% seeds comprised a mixture of 33% broken sunflower seeds, 33% golden linseed and 33% brown linseed. However, using 100% seeds in the seed-coating layer did not lead to a fully closed coating. Additionally, the coating did not remain stable during consumer preparation, wherein the coating broke and fell apart which was disappointing for most consumers. The taste and texture of the product was also assessed. For a product comprising 100% seeds in the seed-coating layer, the taste of the seeds was considered to be too dominant and not balanced with the fish taste.

In a second trial, a product comprising a seed coating layer with 70% whole seed and 30% fine rusk was tested. Fine rusk has a fine particle size, with > 95% of particles being less than 0.5 mm. A photograph of the resultant product is shown in Figure 2. The resultant product had a poor distribution of whole seed with a coating that did not cover the core. This is believed to arise due to the big differences in size between the rusk and the whole seed, leading to strong segregation and an irregular coating. In processing, using the fine rusk, the surface was found to be saturated and larger whole seeds were found not to adhere well. The fine rusk also absorbed moisture such that no crispness was achieved.

In a final trial, a product was prepared comprising a seed coating layer with 80% whole seed and 20 % breadcrumb of larger particle size as compared to the fine rusk. The breadcrumbs used had the following particle size distribution as determined by sieve analysis, with at least 10% of particles were greater than 0.5 mm.

**Table 1: Medium-sized breadcrumb particle size distribution in accordance with US standard. For the medium sized-breadcrumbs, at least 25% of particles are less than 1.7 mm. Further 50% of the particles have a particle size between 0.5 mm and 2.8 mm.**

| | |
|---|---|
| Retained 4.0 mm sieve | 1% max |
| Retained 2.8 mm sieve | 15% max |
| Retained 1.7 mm sieve | 30-50% |
| Retained 0.71 mm sieve | 24-50% |
| Retained 0.25 mm sieve | 10-30% |
| Retained base | 0-8% |

This combination of whole seed and breadcrumb of a certain size provided a product with a unique and crunchy texture, and had an even distribution of whole seed. The use of a small amount of breadcrumbs (e.g., at least 10 wt. % and ~ 20% breadcrumbs) also contributed to the delivery of a balanced taste and the perfect crunch after oven preparation.

Furthermore, the particle size of the breadcrumbs allowed for complete coverage without holes, wherein the seeds dominate the appearance. In terms of taste, a good balance of coating and the core (e.g., fish) was also achieved as well as a desirable crispness. Preliminary kitchen experiments shows that coverage of the core is the most optimal when using medium-sized breadcrumbs, e.g., as compared to coarser breadcrumbs where 78-91% of particles had a particle size between 1.7 mm and 4mm. A medium-size particle distribution (i.e., comprising both coarse and fine breadcrumb components) was found to have the most optimally stable and closed coating. This further improves product protection, e.g., against aging due to oxidation of the core, and less provides the most frustration-free consumer cooking, since a more stable coating is less likely to split. A medium-size particle distribution is therefore most preferred, however, not essential to the present invention.

### Composition of Example Manufactured Products

**Table 2: Example compositions**

| | Example 1 Linseed/Sunflower | Example 2 Pumpkin/Sunflower/ Buckwheat | Example 3 Buckwheat/Quinoa |
|---|---|---|---|
| % Core | 62 | 62 | 62 |
| % Dust Layer | 3 | 3 | 3 |
| % Batter Layer | 16 | 16 | 16 |
| % Seed-Coating Layer | 18 | 19 | 18 |
| Core | Alaska Pollock | Alaska Pollock | Alaska Pollock |
| Shape | Pressure-formed fillet | Pressure-formed fillet | Pressure-formed fillet |
| Coating | Fully coated | Fully coated | Fully coated |
| Pre-fried | Yes | Yes | Yes |
| Composition and proportion of seeds | 50 % sunflower seeds, 25% golden linseed, 25% brown linseed | 50% pumpkin seeds, 25% sunflower seeds, 25% buckwheat seeds | 50% buckwheat, 25% blond quinoa, 25% red quinoa. |
| Relative ratio of seeds/breadcrumbs | 80% seeds, 20% breadcrumbs with the particle size distribution as detailed in Table 1. | 80% seeds, 20% breadcrumbs with the particle size distribution as detailed in Table 1. | 80% seeds, 20% breadcrumbs with the particle size distribution as detailed in Table 1. |
| % whole seed per product | 14.5 | 15 | |

### Method of Manufacturing

Examples 1-3 were manufactured according to the following method.

An Alaskan Pollock fish core was sawn from block, and pressured-formed in to a fillet shape using the Nienstedt technology. The sawn piece is pressed into a mould using high pressure and is transformed to a natural fillet shape. In this case, a 68g core with 12 cm length, 3.1 cm width and 1.9 cm height/thickness is formed.

The core was coated with a dust-layer of fine rusk "TP19" using the Optiflour machine with a belt speed of approx. 16 m/min.

The dust layer was coated with a wet adhesion batter mixture comprising 60% wet ingredients and 40% dry ingredients (comprising 62% Water, 34% Wheat Flour, 2,3% Salt, <2% Mustard, Turmeric, Black Pepper, Lemon oil), mixed in a Tempumixer for 65 sec and applied as a fixed curtain for the portions to pass through.

To the batter, was applied a seed-coating mixture comprising whole seeds and breadcrumbs (Frokrum Bcrum Low SaltEu E (product code C22315-0) from Newly Weds Foods) using another Optiflour machine with an integrated roll to fix the outer coating.

After the seed-coating mixture was applied, the product was pre-fried in rapeseed oil at 195 °C for 40 seconds. The pre-fried product was then frozen at ≤ - 18°C for 35 minutes before packaging.

### Properties of Example Manufactured Food Products

Photographs of manufactured food products according to Examples 1-3 are demonstrated in Figure 3. As is evident from the photographs, the manufactured food products have a unique and appetizing appearance with a good distribution and coverage of whole seed with a coating that fully surrounds the core with no noticeable splitting. These products could be coated using standard industrial coating equipment without further modification.

### Nutritional Values

The Example products are healthy products that are low in saturated fat, low in carbohydrate and rich in protein. The Example products also provide a higher amount of dietary fibre.

**Table 3: Nutritional Values of Example Compositions**

| Nutritional Values /100q | Example 1 Linseed/Sunflower | Example 2 Pumpkin/Sunflower/ Buckwheat |
|---|---|---|
| Energy kJ | 878 | 852 |
| Energy kcal | 210 | 204 |
| Fat g | 12 | 9.8 |
| of which SAFA g | 1.1 | 1.2 |
| Carbohydrates g | 10 | 13 |
| of which Sugars g | 0.5 | <0.5 |
| Protein | 14 | 15 |
| Fibre Dietary g | 3.2 | 1.7 |

### Sensory Testing

Manufactured Food Products corresponding to Example 2 and Example 3 were submitted for consumer sensory testing. The test was set up as a blind in-home use test where the products were baked at home by the consumer. The 126 participants were between 18-64 years, 80% female and 20% male, and were usual consumers of breaded or battered fish.

Consumers were asked to rank the products on the following features on a 9-pt scale, with 9 representing the highest/best score: Overall liking; Appearance (frozen); Appearance (after preparation); Appearance of fish; Colour of fish; Coating overall; Flavour overall; Texture overall, mouthfeel of grains/seeds; Aftertaste. As shown in Figure 4, both Example 2 and 3 were deemed very likeable by consumers. Example 2 had slightly higher overall mean scores as compared to Example 3 and was preferred overall.

Significantly, both Example products were regarded as rather or very healthy by respondents (Example 2 - 82%; Example 3 - 83%), and both Examples would be bought again by the majority of respondents (Example 2 - 78%; Example 3 - 61%).

### Further Sensory Testing

**Table 4: Further Example and Comparative Example compositions**

| | Example B77 | Comparative Example B78 |
|---|---|---|
| % Core | 68 | 60 |
| % Dust Layer | 0 | 4 |
| % Batter Layer | 12 | 17 |
| % Seed-Coating Layer | 20 | 19 |
| Species of Core | Alaska Pollock | Alaska Pollock |
| Shape | Pressure-formed fillet | Pressure-formed fillet |
| Coating | Fully coated | Top-coated only |
| Composition and proportion of seeds | 50 % sunflower seeds, 25% golden linseed, 25% brown linseed | 50 % buckwheat, 25% blond quinoa, 25% red quinoa |
| Relative ratio of seeds/breadcrumbs | 70% seeds, 30 % medium-ground breadcrumbs with the particle size distribution as detailed in Table 1. | 100% seeds |

24 consumers (in 4 groups of 6) were asked to rate the products out of 10. The mean score for B77 was 6.91 as compared to B78 which had a mean score of 5.75. For B77, the coating was judged to be nice and very crunchy, with a good ratio of fish and coating/seeds. For comparative product B78, consumers considered to be too many seeds and grains which dominated the fish. This provides further evidence that a seed-coating layer comprising 100% seeds provides a less acceptable texture to the consumer.

### Competitor Analysis

The present inventors analysed other competitive products on the market. Another product identified with a seed coating layer included was some frozen seeded haddock fillets. These had a coating comprising pumpkin seeds, linseeds, poppy seeds and sunflower seeds. However, as demonstrated in Figure 5, the competitor product had significantly less whole seed in the seed coating layer as compared to products of the present invention and had poorer whole seed coverage of the core. The higher carbohydrate content of more than 16 g/100g further indicates that more breadcrumbs are used and therefore it has more of a bread-like character. As a result, the competitor product simply did not have the same unique crunchy texture as the present invention where the seeds dominate the texture of the overall product. The competitor coating was also regarded as very bland in flavor, with much less flavor from seed.

## Claims

1. A manufactured food product comprising a core and a coating, wherein the coating comprises a seed-coating layer, wherein the seed-coating layer comprises from about 70-90 wt. % whole seed and from about 10-30 wt. % breadcrumbs, wherein the breadcrumbs have a particle size wherein at least 10% of the breadcrumbs are greater than 0.5 mm.

2. The manufactured food product of any preceding claim, wherein the seed-coating layer comprises from about 75-85 wt. % whole seed and from about 15-25 wt. % breadcrumbs, more preferably about 80 wt. % whole seed and 20 wt. % breadcrumbs.

3. The manufactured food product of any preceding claim, wherein at least 99% of the breadcrumbs have a particle size of less than 4mm, as determined by sieve analysis.

4. The manufactured food product of any preceding claim, wherein
A) at least 25% of the breadcrumbs have a particle size of less than 1.7mm and/or
B) at least 50% of the breadcrumbs have a particle size between 0.5 mm and 2.8 mm as determined by sieve analysis.

5. The manufactured food product of any preceding claim, wherein the coating further comprises a batter layer disposed between the core and the seed coating layer, optionally wherein the batter layer is formed from a batter mixture comprising 55 to 70 % water and 25 to 40% wheat flour.

6. The manufactured food product according to claim 5, wherein the coating further comprises a dust layer, wherein the dust layer is disposed between the core and the batter layer, optionally wherein the food product comprises
50-75 wt. % core, preferably about 57-67 wt. % core, more preferably about 62 wt. % 10-20 wt. % batter layer, preferably about 13-19 wt. %, more preferably about 16 wt. % 15-25 wt. % seed coating layer, preferably about 16-21 wt. %, more preferably about 18-19 wt. %, wherein wt. % refers to the percentage weight of the manufactured food product.

7. The manufactured food product of any preceding claim, wherein the manufactured food product is a frozen manufactured food product.

8. The manufactured food product of any preceding claim, wherein the whole seeds are selected from pumpkin seeds, sunflower seeds, linseed, buckwheat, quinoa or a combination thereof,
optionally wherein the whole seeds are
A) a combination of pumpkin seeds, sunflower seeds and buckwheat, or
B) a combination of linseed and sunflower seeds.

9. The manufactured food product of any preceding claim, wherein the coating surrounds the core.

10. The manufactured food product of any preceding claim, wherein the manufactured food product is pre-fried.

11. The manufactured food product of any preceding claim, wherein the breadcrumbs have the following particle size distribution as determined by sieve analysis:
over 4 mm - up to 1%
between 2.8 mm-<4mm - up to 15%
between 1.7mm-<2.8mm - 30-50%
between 0.71 mm-<1.7 mm - 24-50%
between 0.25mm-<0.71 mm - 10-30%
less than 0.25 mm - up to 8%

12. The manufactured food product of any preceding claim, wherein the food product has a dietary fibre content of at least 1.7 g per 100g of food product, a carbohydrate content of less than 14 g per 100 g of food product and a protein content of at least 14 g per 100 g of food product.

13. The manufactured food product of any preceding claim, wherein the core is selected from fish, chicken, pork, seafood, or a plant-based material, preferably wherein the core is fish.

14. A method of producing a manufactured food product, the method comprising Providing a core,
Applying a dust onto the core to form a dust layer,
Applying batter mixture onto the dust layer,
Applying a seed-coating mixture onto the batter mixture, wherein the seed-coating mixture comprises from about 70-90 wt. % whole seed, and from about 10 - 30 wt. % breadcrumb, and
Pre-frying the coated food product in oil, wherein the breadcrumbs have a particle size wherein at least 10% of the breadcrumbs are greater than 0.5 mm.

15. A method of producing the manufactured food product according to claim 14, wherein prior to providing the core, the method comprises pressure-forming core material into a fillet shape.

## Patentansprüche

1. Hergestelltes Nahrungsmittelerzeugnis, umfassend einen Kern und eine Beschichtung, wobei die Beschichtung eine Samenbeschichtungsschicht umfasst, wobei die Samenbeschichtungsschicht etwa 70-90 Gew.-% ganze Saaten und etwa 10-30 Gew.-% Semmelbrösel umfasst, wobei die Semmelbrösel eine Partikelgröße aufweisen, wobei mindestens 10 % der Semmelbrösel größer als 0,5 mm sind.

2. Hergestelltes Nahrungsmittelerzeugnis nach einem der vorhergehenden Ansprüche, wobei die Samenbeschichtungsschicht etwa 75-85 Gew.-% ganze Saaten und etwa 15-25 Gew.-% Semmelbrösel umfasst, bevorzugter etwa 80 Gew.-% ganze Saaten und 20 Gew.-% Semmelbrösel.

3. Hergestelltes Nahrungsmittelerzeugnis nach einem der vorhergehenden Ansprüche, wobei mindestens 99 % der Semmelbrösel eine Partikelgröße von weniger als 4 mm aufweisen, wie durch Siebanalyse bestimmt.

4. Hergestelltes Nahrungsmittelerzeugnis nach einem der vorhergehenden Ansprüche, wobei
A) mindestens 25 % der Semmelbrösel eine Partikelgröße von weniger als 1,7 mm aufweisen und/oder
B) mindestens 50 % der Semmelbrösel eine Partikelgröße zwischen 0,5 mm und 2,8 mm aufweisen, wie durch Siebanalyse bestimmt.

5. Hergestelltes Nahrungsmittelerzeugnis nach einem der vorhergehenden Ansprüche, wobei die Beschichtung ferner eine Backteigschicht umfasst, die zwischen dem Kern und der Samenbeschichtungsschicht angeordnet ist, optional wobei die Backteigschicht aus einer Backteigmischung gebildet ist, die 55 bis 70 % Wasser und 25 bis 40 % Weizenmehl umfasst.

6. Hergestelltes Nahrungsmittelerzeugnis nach Anspruch 5, wobei die Beschichtung ferner eine Bestäubungsschicht umfasst, wobei die Bestäubungsschicht zwischen dem Kern und der Backteigschicht angeordnet ist, optional wobei das Nahrungsmittelerzeugnis Folgendes umfasst
50-75 Gew.-% Kern, vorzugsweise etwa 57-67 Gew.-% Kern, bevorzugter etwa 62 Gew.-%
10-20 Gew.-% Backteigschicht, vorzugsweise etwa 13-19 Gew.-%, bevorzugter etwa 16 Gew.-%
15-25 Gew.-% Samenbeschichtungsschicht, vorzugsweise etwa 16-21 Gew.-%, bevorzugter etwa 18-19 Gew.-%, wobei sich Gew.-% auf den Gewichtsanteil des hergestellten Nahrungsmittelerzeugnisses bezieht.

7. Hergestelltes Nahrungsmittelerzeugnis nach einem der vorhergehenden Ansprüche, wobei das hergestellte Nahrungsmittelerzeugnis ein gefrorenes hergestelltes Nahrungsmittelerzeugnis ist.

8. Hergestelltes Nahrungsmittelerzeugnis nach einem der vorhergehenden Ansprüche, wobei die ganzen Saaten ausgewählt sind aus Kürbiskernen, Sonnenblumenkernen, Leinsaat, Buchweizen, Quinoa oder einer Kombination davon,
optional wobei die ganzen Saaten Folgendes sind
A) eine Kombination von Kürbiskernen, Sonnenblumenkernen und Buchweizen oder
B) eine Kombination von Leinsaat und Sonnenblumenkernen.

9. Hergestelltes Nahrungsmittelerzeugnis nach einem der vorhergehenden Ansprüche, wobei die Beschichtung den Kern umgibt.

10. Hergestelltes Nahrungsmittelerzeugnis nach einem der vorhergehenden Ansprüche, wobei das hergestellte Nahrungsmittelerzeugnis vorfrittiert ist.

11. Hergestelltes Nahrungsmittelerzeugnis nach einem der vorhergehenden Ansprüche, wobei die Semmelbrösel die folgende Partikelgrößenverteilung aufweisen, wie durch Siebanalyse bestimmt:
über 4 mm - bis zu 1 %
zwischen 2,8 mm-<4 mm - bis zu 15 %
zwischen 1,7 mm-<2,8 mm - 30-50 %
zwischen 0,71 mm-<1,7 mm - 24-50 %
zwischen 0,25 mm-<0,71 mm - 10-30 %
weniger als 0,25 mm - bis zu 8 %

12. Hergestelltes Nahrungsmittelerzeugnis nach einem der vorhergehenden Ansprüche, wobei das Nahrungsmittelerzeugnis einen Ballaststoffgehalt von mindestens 1,7 g pro 100 g Nahrungsmittelerzeugnis, einen Kohlenhydratgehalt von weniger als 14 g pro 100 g Nahrungsmittelerzeugnis und einen Proteingehalt von mindestens 14 g pro 100 g Nahrungsmittelerzeugnis aufweist.

13. Hergestelltes Nahrungsmittelerzeugnis nach einem der vorhergehenden Ansprüche, wobei der Kern ausgewählt ist aus Fisch, Hähnchen, Schweinefleisch, Meeresfrüchten oder einem pflanzlichen Material, vorzugsweise wobei der Kern Fisch ist.

14. Verfahren zum Herstellen eines hergestellten Nahrungsmittelerzeugnisses, wobei das Verfahren umfasst
Bereitstellen eines Kerns,
Aufbringen einer Bestäubung auf den Kern zum Bilden einer Bestäubungsschicht,
Aufbringen einer Backteigmischung auf die Bestäubungsschicht,
Aufbringen einer Samenbeschichtungsmischung auf die Backteigmischung, wobei die Samenbeschichtungsmischung etwa 70-90 Gew.-% ganze Saaten und etwa 10-30 Gew.-% Semmelbrösel umfasst, und
Vorfrittieren des beschichteten Nahrungsmittelerzeugnisses in Öl, wobei die Semmelbrösel eine Partikelgröße aufweisen, wobei mindestens 10 % der Semmelbrösel größer als 0,5 mm sind.

15. Verfahren zum Herstellen des hergestellten Nahrungsmittelerzeugnisses nach Anspruch 14, wobei das Verfahren vor dem Bereitstellen des Kerns Druckformen von Kernmaterial in eine Filetform umfasst.

## Revendications

1. Produit alimentaire industriel comprenant un cœur et un enrobage, dans lequel l'enrobage comprend une couche d'enrobage à base de graines, dans lequel la couche d'enrobage à base de graines comprend d'environ 70 à 90 % en poids de graines entières et d'environ 10 à 30 % en poids de chapelure, dans lequel la chapelure présente une taille de particules telle qu'au moins 10 % de la chapelure présente une taille de particules supérieure à 0,5 mm.

2. Produit alimentaire industriel selon une quelconque revendication précédente, dans lequel la couche d'enrobage à base de graines comprend d'environ 75 à 85 % en poids de graines entières et d'environ 15 à 25 % en poids de chapelure, plus préférablement environ 80 % en poids de graines entières et 20 % en poids de chapelure.

3. Produit alimentaire industriel selon une quelconque revendication précédente, dans lequel au moins 99 % de la chapelure présente une taille de particules inférieure à 4 mm, telle que déterminée par analyse granulométrique.

4. Produit alimentaire industriel selon une quelconque revendication précédente, dans lequel
A) au moins 25 % de la chapelure présente une taille de particules inférieure à 1,7 mm et/ou
B) au moins 50 % de la chapelure présente une taille de particules comprise entre 0,5 mm et 2,8 mm telle que déterminée par analyse granulométrique.

5. Produit alimentaire industriel selon une quelconque revendication précédente, dans lequel l'enrobage comprend en outre une couche de pâte disposée entre le cœur et la couche d'enrobage à base de graines, dans laquelle éventuellement la couche de pâte est formée à partir d'un mélange de pâte comprenant de 55 à 70 % d'eau et de 25 à 40 % de farine de blé.

6. Produit alimentaire industriel selon la revendication 5, dans lequel l'enrobage comprend en outre une couche de saupoudrage, dans lequel la couche de saupoudrage est disposée entre le cœur et la couche de pâte, dans lequel éventuellement le produit alimentaire comprend
de 50 à 75 % en poids de cœur, de préférence d'environ 57 à 67 % en poids de cœur, plus préférablement environ 62 % en poids
de 10 à 20 % en poids de couche de pâte, de préférence d'environ 13 à 19 % en poids, plus préférablement environ 16 % en poids
de 15 à 25 % en poids de couche d'enrobage à base de graines, de préférence d'environ 16 à 21 % en poids, plus préférablement d'environ 18 à 19 % en poids, dans lequel « % en poids » fait référence au pourcentage en poids du produit alimentaire industriel.

7. Produit alimentaire industriel selon une quelconque revendication précédente, dans lequel le produit alimentaire industriel est un produit alimentaire industriel congelé.

8. Produit alimentaire industriel selon une quelconque revendication précédente, dans lequel les graines entières sont sélectionnées parmi des graines de citrouille, des graines de tournesol, des graines de lin, du sarrasin, du quinoa ou une combinaison de ceux-ci,
dans lequel éventuellement les graines entières sont
A) une combinaison de graines de citrouille, de graines de tournesol et de sarrasin, ou
B) une combinaison de graines de lin et de graines de tournesol.

9. Produit alimentaire industriel selon une quelconque revendication précédente, dans lequel l'enrobage entoure le cœur.

10. Produit alimentaire industriel selon une quelconque revendication précédente, dans lequel le produit alimentaire industriel est préfrit.

11. Produit alimentaire industriel selon une quelconque revendication précédente, dans lequel la chapelure présente la distribution granulométrique suivante telle que déterminée par analyse granulométrique :
plus de 4 mm - jusqu'à 1 %
entre 2,8 mm et < 4 mm - jusqu'à 15 %
entre 1,7 mm et < 2,8 mm - de 30 à 50 %
entre 0,71 mm et < 1,7 mm - de 24 à 50 %
entre 0,25 mm et < 0,71 mm - de 10 à 30 %
moins de 0,25 mm - jusqu'à 8 %

12. Produit alimentaire industriel selon une quelconque revendication précédente, dans lequel le produit alimentaire présente une teneur en fibres alimentaires d'au moins 1,7 g pour 100 g de produit alimentaire, une teneur en glucides inférieure à 14 g pour 100 g de produit alimentaire et une teneur en protéines d'au moins 14 g pour 100 g de produit alimentaire.

13. Produit alimentaire industriel selon une quelconque revendication précédente, dans lequel le cœur est choisi parmi du poisson, du poulet, du porc, des fruits de mer ou une matière d'origine végétale, de préférence dans lequel le cœur est du poisson.

14. Procédé de production d'un produit alimentaire industriel, le procédé comprenant
la fourniture d'un cœur,
l'application d'un saupoudrage sur le cœur afin de former une couche de saupoudrage,
l'application du mélange de pâte sur la couche de saupoudrage,
l'application d'un mélange d'enrobage à base de graines sur le mélange de pâte, dans lequel le mélange d'enrobage à base de graines comprend d'environ 70 à 90 % en poids de graines entières et d'environ 10 à 30 % en poids de chapelure, et
la préfriture du produit alimentaire enrobé dans l'huile, dans lequel la chapelure présente une taille de particules telle qu'au moins 10 % de la chapelure présente une taille de particules supérieure à 0,5 mm.

15. Procédé de production du produit alimentaire industriel selon la revendication 14, dans lequel, avant la fourniture du cœur, le procédé comprend le formage sous pression de la matière de cœur en forme de filet.
